# EUROPÄISCHE PATENTANMELDUNG

(11) **EP 2 184 628 A2**
(43) Veröffentlichungstag der Anmeldung: **12.05.2010**
(21) Anmeldenummer: 09013969.2
(22) Anmeldetag: 06.11.2009
(51) Int. Cl.: G02B 6/00, G09F 13/18, G09F 13/22, F21V 8/00

(54) **Leuchte, insbesondere Not-, Rettungs oder Sicherheitsleuchte**

(30) Priorität: 06.11.2008 DE 202008014775 U; 28.01.2009 DE 202009001048 U
(71) Anmelder: CEAG Notlichtsysteme GmbH, 59494 Soest (DE)
(72) Erfinder: Sabla, Kai Hendrik, 59494 Soest (DE)
(74) Vertreter: Grünecker, Kinkeldey, Stockmair & Schwanhäusser Anwaltssozietät

(57) **Zusammenfassung**

Eine Leuchte, insbesondere Not-, Rettungs- oder Sicherheitsleuchte, weist wenigstens eine LED-Lichtquelle, eine transparente beziehungsweise durchscheinende und flache Lichtleiterplatte, welche zumindest auf einer ersten seitlichen Oberfläche eine aus einer Vielzahl von Mikrostrukturen gebildeter Lichtverteilstruktur zur gleichmäßigen Ausleuchtung einer der ersten seitlichen Oberfläche gegenüberliegenden zweiten seitlichen Oberfläche aufweist, und eine beziehungsweise ein der zweiten seitlichen Oberfläche zugeordnete Streuscheibe beziehungsweise Piktogramm auf. Die LED-Lichtquelle ist wenigstens einem Abschnitt einer im Wesentlichen umlaufenden Lichteintrittskante der Lichtleiterplatte zur Lichteinkopplung zugeordnet und eine Lichteinkoppelstruktur ist auf zumindest den der LED-Lichtqeulle zugeordneten Abschnitten der Lichteintrittskante ausgebildet.

Eine Leuchte ist dahingehend verbessert, dass sie eine hohe Energieeffizienz und kompakte Bauweise aufweist, eine sehr gleichmäßige Ausleuchtung der Streuscheibe beziehungsweise des Piktogramms gewährleistet und gleichzeitig eine Reduzierung von Blendung erfolgt.

## Beschreibung

Die Erfindung betrifft eine Leuchte, insbesondere eine Not-, Rettungs- oder Sicherheitsleuchte. Solche Leuchten dienen beispielsweise als Teil der Allgemeinbeleuchtung zur Beleuchtung innerhalb oder auch außerhalb von Gebäuden und insbesondere zur Ausleuchtung von Fluchtwegen oder Arbeitsplätzen mit besonderer Gefährdung. Die Leuchte kann als Wand- oder Deckenleuchte oder auch als Hängeleuchte oder in anderer Weise abgehängte Leuchte ausgebildet sein. Solche Leuchten sind in der Regel innerhalb von Gebäuden angeordnet, um beispielsweise einen Fluchtweg zu kennzeichnen. Dazu weisen diese Leuchten zumindest eine entsprechende Lichtquelle und ein Piktogramm auf. Das Piktogramm kann zur Kennzeichnung der Richtung eines Fluchtweges, zur Kennzeichnung eines Ausgangs, zur Kennzeichnung einer Feuerlöscheinrichtung oder dergleichen dienen. Eine Vielzahl unterschiedlicher Piktogramme sind aus der Praxis bekannt.

Als entsprechende Lichtquelle eignen sich insbesondere LED's auf Grund ihrer hohen Lebensdauer und des geringen Energiebedarfs. Solche LED-Lichtquellen weisen allerdings in der Regel eine punktuelle, wenn auch hohe Leuchtdichte auf. Um solche Leuchten für eine relatiav gleichmäßige Ausleuchtung, insbesondere ein Sicherheits- oder Rettungszeichen und des zugehörige Piktogramms nutzen zu können, werden relativ dicke Lichtleiterplatten aus beispielsweise Polymethylmethacrylat (PMMA) verwendet. Die entsprechende LED-Lichtquelle befindet sich im Bereich eines Randes einer solchen Lichtleiterplatte, wobei sich trotz deren Verwendung eine zum Teil ungleichmäßige Ausleuchtung, sogenannte Hot Spots oder auch eine unerwünschte Blendung ergeben können.

Es sind ebenfalls Leuchten bekannt, bei denen diffustransmittierende Materialien wie PMMA oder aus Polycarbonat (PC) eingesetzt werden, die in der Regel von hinten durch die LED-Lichtquelle bestrahlt werden. Diese Materialien weisen eine sehr diffuse Transmission auf, so dass in der Regel eine ausreichend gleichmäßige Ausleuchtung des Piktogramms erzeugt werden kann.

Bei solchen Leuchten ist allerdings zu beachten, dass relativ viel Licht von den diffustransmittierenden Materialien absorbiert wird und gegebenenfalls die LED-Lichtquelle im Abstand zu diesen Materialien angeordnet werden müssen, um doch noch eine ausreichend gleichmäßige Ausleuchtung zu erzielen.

Insgesamt ergibt sich als Nachteil, dass die bisher bekannten Leuchten eine ungleichmäßige Ausleuchtung oder eine geringe Energieeffizienz aufweisen und/oder zu Leuchten mit relativ großen Abmessungen führen.

Der Erfindung liegt die Aufgabe zu Grunde, eine solche Leuchte dahingehend zu verbessern, dass sie eine hohe Energieeffizienz und kompakte Bauweise aufweist, eine sehr gleichmäßige Ausleuchtung der Streuscheibe beziehungsweise des Pktogramms gewährleistet ist und gleichzeitig eine Reduzierung von Blendung erfolgt.

Diese Aufgabe wird durch eine Leuchte gelöst mit mindestens einer LED-Lichtquelle, einer transparenten bzw. durchscheinenden und flachen Lichtleiterplatte, welche auf zumindest einer ersten seitlichen Oberfläche eine aus einer Vielzahl von Mikrostrukturen gebildete Lichtverteilstruktur zur gleichmäßigen Ausleuchtung einer der ersten seitlichen Oberfläche gegenüberliegenden zweiten seitlichen Oberfläche aufweist, und einer beziehungsweise einem der zweiten seitlichen Oberfläche zugeordneten Streuscheibe beziehungsweise Piktogramms, wobei die LED-Lichtquelle wenigstens einem Abschnitt einer im Wesentlichen umlaufenden Lichteintrittskante der Lichtleiterplatte zur Lichteinkopplung zugeordnet und eine Lichteinkoppelstruktur auf zumindest den der LED-Lichtquelle zugeordneten Abschnitten der Lichteintrittskante ausgebildet ist.

Durch die Verwendung dieser entsprechenden Lichtleiterplatte kann die LED-Lichtquelle in unmittelbarer Nähe von deren Lichteintrittskante angeordnet werden. Dadurch wird die hohe punktuelle Leuchtdichte der LED-Lichtquelle nahezu vollständig zur Lichteinkopplung ausgenutzt, so dass die Lichteinkopplung sehr effizient ist. Es besteht daher die Möglichkeit, auch LED-Lichtquellen mit geringem Energiebedarf und gegebenenfalls einer geringeren Leuchtdichte zu benutzen.

Durch die geringe Dicke der Lichtleiterplatte ergibt sich insgesamt ein flaches Design und eine sehr kompakte Bauweise der entsprechenden Leuchte. Es ist mit solchen Leuchten beispielsweise möglich, diese ähnlich zu einem Bild direkt an einer Wand aufliegend anzuordnen.

Die gleichmäßige Ausleuchtung der Streuscheibe beziehungsweise des Pktogramms ergibt sich durch die aus der Vielzahl von Mikrostrukturen gebildete Lichtverteilstruktur. Diese sorgt dafür, dass sowohl in Höhen - als auch in Breitenrichtung der Leuchte keine optisch wahrnehmbaren Ausleuchtungsunterschiede der Streuscheibe auftreten. Die Anordnung der Mikrostrukturen kann chaotisch sein, aber auch streng geordnet, wobei auch jede Anordnung zwischen diesen Extremen möglich ist.

Eine besonders gute Ausnutzung der Leuchtdichte der LED-Lichtquelle und eine sehr gleichmäßige Ausleuchtung ergibt sich vorteilhafterweise dann, wenn die Mikrostrukturen als Mikrolinsenstrukturen ausgebildet sind.

Die entsprechenden Mikrostrukturen sind vorteilhafterweise in einer solchen Anzahl vorgesehen, dass die Mikrostrukturen mit einer Dichte von mehreren 100 pro cm² und insbesondere mehreren 1000 pro cm² angeordnet sind.

Die Herstellung der Mikrostrukturen kann in unterschiedlicher Weise erfolgen. Bei einem Ausführungsbeispiel sind diese als gespritzte Mikrostrukturen ausgebildet. Es ist ebenfalls möglich, dass die Mikrostrukturen nachträglich nach Herstellung der Lichtleiterplatte geformt werden.

Bei der entsprechenden Ausbildung der Mikrostrukturen besteht die Möglichkeit, diese in ihrer Orientierung, Anordnung, Größe, Form und dergleichen variabel auszubilden. Formen für solche Mikrostrukturen oder auch Mikrolinsenstrukturen sind beispielsweise umgekehrt V-förmige oder auch teilsphärische Formen. Es besteht ebenfalls die Möglichkeit, entsprechende Mikrostrukturen statt durch über die entsprechende Oberfläche vorstehende Strukturen durch in die Oberfläche hineinragende Strukturen zu bilden.

Um insbesondere je nach Größe der entsprechenden Lichtleiterplatte und je nach erwünschter Helligkeit der Leuchte eine ausreichende Ausleuchtung zu erhalten, kann die LED-Lichtquelle eine Mehrzahl von einzelnen LED's oder Mehrfachchip-LED's aufweisen. Bei solchen Mehrfachchip-LED's ergibt sich als weiterer Vorteil, dass bei Ausfall einer LED Strom über die anderen Chips weiterfließt und die Wahrscheinlichkeit eines dunklen Punktes sehr gering ist.

Um die LED-Lichtquelle in einfacher Weise der sehr schmalen Lichteintrittskante der Lichtleiterplatte zuordnen zu können, kann die LED-Lichtquelle streifenförmig ausgebildet sein.

Bei Verwendung mehrerer LED's für die LED-Lichtquelle besteht außerdem die Möglichkeit, LED's mit unterschiedlichen Ausrichtungen und/oder unterschiedlichen Farben zu verwenden. In diesem Zusammenhang kann es weiterhin günstig sein, wenn LED's mit unterschiedlichen Farben einzeln ansteuerbar sind.

Die Lichtleiterplatte ist sehr flach und dünn im Vergleich zu bekannten PMMA oder PC-Platten, wobei vorzugsweise die Lichtleiterplatte eine Dicke im Bereich von 1 bis 10 mm und insbesondere im Bereich von 2 bis 6 mm aufweist.

Leuchten können einseitig oder auch beidseitig mit einer entsprechenden Streuscheibe einem Piktogramm beziehungsweise ausgebildet sein, so dass die entsprechende Lichtabstrahlung ebenfalls einseitig oder beidseitig erfolgen kann. Bei einer einseitigen Leuchte ist es in der Regel von Vorteil, wenn der nicht zur Ausstrahlung verwendeten Seite eine Reflektionseinrichtung zugeordnet ist. Bei vorliegender Leuchte bedeutet dies beispielsweise, dass der ersten seitlichen Oberfläche eine Rückreflektionseinrichtung zugeordnet ist. Es besteht die Möglichkeit, diese direkt auf der ersten seitlichen Oberfläche der Lichtleiterplatte anzuordnen. Es ist auch denkbar, dass die Rückreflektionseinrichtung nicht direkt auf der seitlichen Oberfläche, sondern in deren Nähe beispielsweise an einer entsprechenden Leuchtenhalterung angeordnet ist. Die Rückreflektionseinrichtung kann als Folie oder andere flächige Struktur ausgebildet sein.

Eine solche Leuchtenhalterung dient zur Verbindung der Einzelteile der Leuchte, wie LED-Lichtquelle, Lichtleiterplatte und Streuscheibe sowie zum Anbringen der Leuchte an Decke oder Wand. Dazu kann die Leuchtenhalterung entsprechende Mittel zur Wand- oder Deckenmontage aufweisen. Es besteht die Möglichkeit, direkt an der Wand oder Decke zu montieren oder über einen Ausleger. Andere Möglichkeiten sind eine Pendelaufhängung mit Seil- oder Stababhängung.

In der Regel kann die Leuchtenhalterung insbesondere ein umlaufendes Rahmenbauteil und eine Rückwand aufweisen. Die Rückwand kann in diesem Zusammenhang Träger der Rückreflektionseinrichtung sein. Die Rückwand ist in der Regel geschlossen, so dass nur von der dem umlaufenden Rahmenbauteil zugeordnete Seite der Leuchte Licht mit sehr gleichmäßiger Verteilung austritt beziehungsweise das entsprechende Piktogramm wahrnehmbar ist. Die LED-Lichtquelle ist ebenfalls innerhalb der Leuchtenhalterung angeordnet und ist an der Rückwand oder am Rahmenbauteil entlang einer entsprechenden Lichteintrittskante der Lichtleiterplatte lösbar befestigt. Die Leuchtenhalterung dient in der Regel auch zur Aufnahme der Elektronik der Leuchte, wie z.B. einer Helligkeitskontrolle oder dergleichen. Die LED-Lichtquelle kann auch direkt und insbesondere unlösbar an der Lichtleiterplatte befestigt sein.

Um die LED-Lichtquelle in einfacher Weise mit einer entsprechenden Elektronik zur Ansteuerung und Regelung zu versehen, kann diese auf einer insbesondere streifenförmigen Leiterplatte angeordnet sein.

Es besteht ebenfalls die Möglichkeit, die erfindungsgemäße Leuchte zur beidseitigen Ausstrahlung zu verwenden. In diesem Zusammenhang kann es als vorteilhaft betrachtet werden, wenn die Lichtleiterplatte auf ihrer ersten und zweiten seitlichen Oberfläche mit jeweils aus einer Vielzahl von Mikrostrukturen ausgebildeten Lichtverteilstrukturen ausgebildet ist. Auf diese Weise wird eine gleichmäßige Ausleuchtung beidseitig zur Lichtleiterplatte erreicht. Selbstverständlich sind dabei auch Streuscheiben auf beiden Seiten angeordnet. Eine Rückreflektionseinrichtung ist nicht notwendig.

Bei der Leuchtenhalterung ist in diesem Zusammenhang zu beachten, dass diese keine geschlossene Rückwand aufweist, sondern beispielsweise aus wenigstens einem beidseitig offenen umlaufenden Rahmenteil gebildet ist.

Erfindungsgemäß kann selbstverständlich eine auf beiden seitlichen Oberflächen mit Lichtverteilstrukturen ausgebildete Lichtleiterplatte für eine einseitige Leuchte verwendet werden, da der entsprechende Lichtaustritt durch die Rückreflektionseinrichtung kompensiert wird.

Weiterhin von Vorteil kann sein, wenn die LED-Lichtquelle einer unteren Lichteintrittskante und/oder wenigstens einer Ecke der Lichteintrittskante der Lichtleiterplatte zugeordnet ist. Bei Anordnung der LED-Lichtquelle entlang der unteren Lichteintrittskante ist beispielsweise der gegenüberliegende Raum in der Leuchtenhalterung vollständig zur Unterbringung der entsprechenden Elektronik oder auch zur Nutzung für eine mechanische Anbindung der Leuchte an Wand oder Decke nutzbar. Ergänzend oder alternativ zur Zuordnung zur unteren Lichteintrittskante kann die LED-Lichtquelle auch einer Ecke der Lichteintrittskante zugeordnet sein. Zu diesem Zweck kann die entsprechende Ecke abgeflacht oder abgerundet sein. Es ist ebenfalls denkbar, entsprechende LED-Lichtquellen an zwei diagonal einander gegenüberliegenden Ecken der Lichteintrittskante anzuordnen.
Eine ausreichende Ausleuchtung der entsprechenden Streuscheibe beziehungsweise des entsprechenden Piktogramms kann auch dann erreicht werden, wenn die LED-Lichtquelle einer Randöffnung oder Innenöffnung der Lichtleiterplatte bzw. der dort gebildeten Lichteintrittskante zugeordnet wird. Eine solche Randöffnung kann beispielsweise eine umgekehrt V-förmige Ausnehmung der Leiterplatte sein. Sollte nicht die gesamte Fläche der Lichtleiterplatte zum Ausleuchten der Streuscheibe (Piktogramm) verwendet werden, so ist es ebenfalls denkbar, dass die LED-Lichtquelle in einer beabstandet zum Rand der Lichtleiterplatte angeordneten Innenöffnung der dort gebildeten Lichteintrittskante zugeordnet wird.

Es ist selbstverständlich, dass auch Kombinationen der bisher beschriebenen Anordnungen der LED-Lichtquellen möglich sind.

Weiterhin kann es günstig sein, wenn LED-Lichtquellen an voneinander beabstandeten Abschnitten der Lichteintrittskante angeordnet sind. Auf ein Beispiel wurde bereits oben hingewiesen, siehe diagonal einander gegenüberliegenden Ecken der entsprechenden Lichtleiterplatte.

Der Aufbau ist kompakter und das Design sehr flach, wenn beispielsweise Aufhängungs- oder Befestigungseinrichtungen der Leuchte gegenüberliegend zur LED-Lichtquelle angeordnet sind.

Die entsprechenden Leuchten können mit unterschiedlichen Abmessungen hergestellt werden.

Hinsichtlich des Piktogramms sei noch darauf verweisen, dass dieses beispielsweise als Piktogrammscheibe ausgebildet sein kann. Es besteht ebenfalls die Möglichkeit, das Piktogramm direkt auf der entsprechenden seitlichen Oberfläche der Lichtleiterplatte beispielsweise durch Aufdrucken anzubringen. Bevorzug ist in diesem Zusammenhang Siebdruck oder Tintenstrahldruck. Eine solche Bedruckung kann natürlich auch bei einer separaten Piktogrammscheibe verwendet werden. Eine weitere Möglichkeit zur Herstellung der Piktogrammscheibe ist die Verwendung eines Folienmaterials, Plattenmaterials oder dergleichen. Bevorzugt ist das Material diffustransmittierend.

Bevorzugt kann die Streuscheibe auf ihrer der Lichtleiterplatte abgewandten Oberfläche Mikrostrukturen aufweisen. Diese dienen zur entsprechenden Streuung des von der Lichtleiterplatte eingestrahlten Lichts ohne ansonsten gegebenenfalls durch die LEDs hervorgerufene, sogenannte Hot Spots. Stattdessen wird das Licht von der Lichtleiterplatte nahezu ungerichtet der Streuscheibe zugeführt und mittels der entsprechenden Mikrostrukturen zur Beleuchtung nach außen gestreut.
Ein einfaches Beispiel für entsprechende Mikrostrukturen sind Prismen. Diese können sowohl symmetrisch als auch asymmetrisch je nach gewünschter Streurichtung und -verteilung ausgebildet sein.

Die Anordnung der entsprechenden Mikrostrukturen wird weiterhin vereinfacht, wenn diese linear oder auch zirkular angeordnet sind. Bei einer linearen Anordnung sind die Mikrostrukturen in verschiedenen Reihen und gegebenenfalls von einer Reihe zur anderen versetzt zueinander angeordnet.

Die entsprechende Streuscheibe kann eine Dicke von 1,0 bis 5,0 mm aufweisen, wobei die Mikrostrukturen einen Abstand von 0,5 bis 1,5 mm und bevorzugt von 0,8 bis 1,2 mm aufweisen.

Ein Beispiel für entsprechende Prismen als Mikrostrukturen sind Prismen, die in kegelartiger Geometrie geformt sind. Andere Geometrien für die entsprechenden Prismen oder Mikrostrukturen sind ebenfalls denkbar, wie lineare Prismen, Fresnel-Linsen, welche gegebenenfalls auch gekreuzt angeordnet sind, oder auch Prismen mit beispielsweise sinusförmig modifiziertem Querschnitt.

Die Streuscheibe kann auch durch ihre separate Ausbildung zu den übrigen Teilen der Leuchte gegen Streuscheiben mit anderen Mikrostrukturen je nach Anforderung ausgetauscht werden. Die Streuscheibe dient insbesondere zur Formgebung, Kontrolle und Verteilung des Lichts in einem bestimmten Winkelbereich. Bevorzugt wird durch die Streuscheibe Licht mit einem Winkel von mehr als 70° und insbesondere mehr als 65° zur Streuscheibensenkrechten abgeschnitten.

Streuscheibe und Lichtleiterplatte können außerdem aus den gleichen Materialien wie PMMA, PC oder dergleichen gebildet sein.

Die vorteilhafte Kombination von Lichtleiterplatte und Streuscheibe erleichtert die Verwendung von LEDs als Lichtquellen für eine Vielzahl von Beleuchtungsanwendungen, wobei insbesondere sehr flache Leuchten mit vorteilhafter Lichtverteilung, verminderter Blendwirkung und gleichmäßiger Ausleuchtung ohne sogenannte Hot Spots möglich sind.

Im Folgenden werden unterschiedliche Ausführungsbeispiele der Erfindung anhand der in der Zeichnung beigefügten Figuren näher erläutert.

### Es zeigen:

- Figur 1: eine auseinandergezogene perspektivische Darstellung eines ersten Ausführungsbeispiels einer erfindungsgemäßen Leuchte, insbesondere ot- oder Sicherheitsleuchte;
- Figur 2: eine Ansicht entsprechend zur Figur 1 eines zweiten erfindungsgemäßen Ausführungsbeispiels;
- Figur 3: eine auseinandergezogene perspektivische Darstellung eines weiteren Ausführungsbeispiels einer erfindungsgemäßen Leuchte;
- Figur 4: eine Ansicht entsprechend zur Figur 3 eines noch weiteren erfindungsgemäßen Ausführungsbeispiels;
- Figur 5: eine Seitenansicht einer Lichtleiterplatte mit unterschiedlichen Ausführungsbeispielen für Mikrostrukturen;
- Figur 6: eine Draufsicht auf eine Lichtleiterplatte mit unterschiedlichen Ausführungsbeispielen zur Anordnung einer oder mehrerer LED-Lichtquellen, und
- Figur 7: eine Draufsicht auf Mikrostrukturen eines Ausführungsbeispiels einer Streuscheibe.

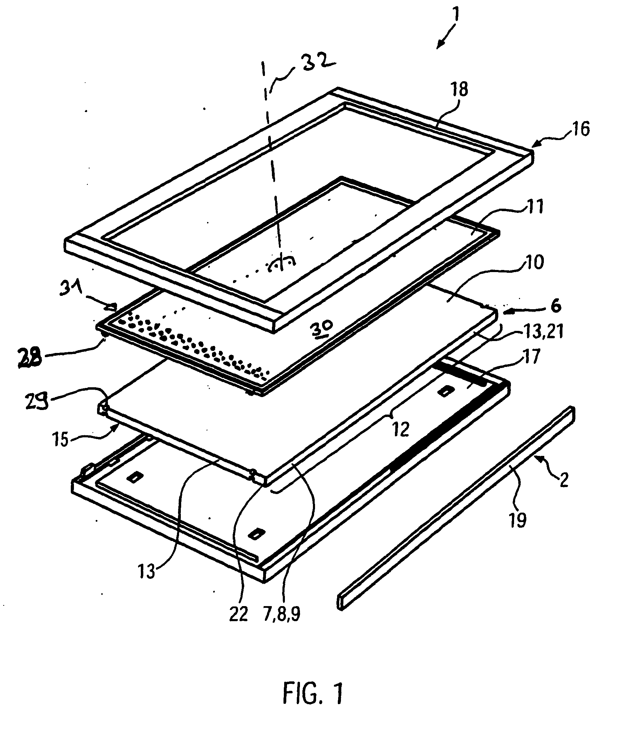

Figur 1 zeigt eine Leuchte 1 mit einer Streuscheibe 11. Die Streuscheibe 11 ist einseitig in einer entsprechenden Leuchtenhalterung 16 aus Rückwand 17 und Rahmenbauteil 18 angeordnet.

Die in Figur 1 dargestellte Streuscheibe ist als separate und austauschbare Streuscheibe ausgebildet. Auf ihrer der Lichtleiterplatte abgewandten Oberfläche 30 weist sie eine Vielzahl von Mikrostrukturen 31 auf. Diese sind als symmetrische oder asymmetrische Prismen ausgebildet. Ein Abstand der einzelnen Mikrostrukturen beträgt 0,5 bis 1,5 mm und bevorzugt 0,8 bis 1,2 mm. Bei Prismen als Mikrostrukturen sind diese in einer kegelartigen Geometrie geformt.

Die Streuscheibe weist auf ihrer entsprechenden Oberfläche 30 eine Streuscheibensenkrechte 32 auf. Durch die entsprechenden Mikrostrukturen 31 wird Licht unter einem Winkel von mehr als 70° und insbesondere von mehr als 65° zu dieser Streuscheibensenkrechten abgeschnitten, so dass nur Licht bis zu dem entsprechenden Winkel von 65° beziehungsweise 70° zur Streuscheibensenkrechten ausgegeben wird. Die Streuscheibe ist aus gleichen Material wie die Lichtverteilerplatte gebildet, wie beispielsweise PMMA, PC oder dergleichen. Die Streuscheibe weist eine Dicke von 1,0 bis 5,0 mm auf, so dass sich insgesamt für die Leuchte eine geringe Dicke ergibt.

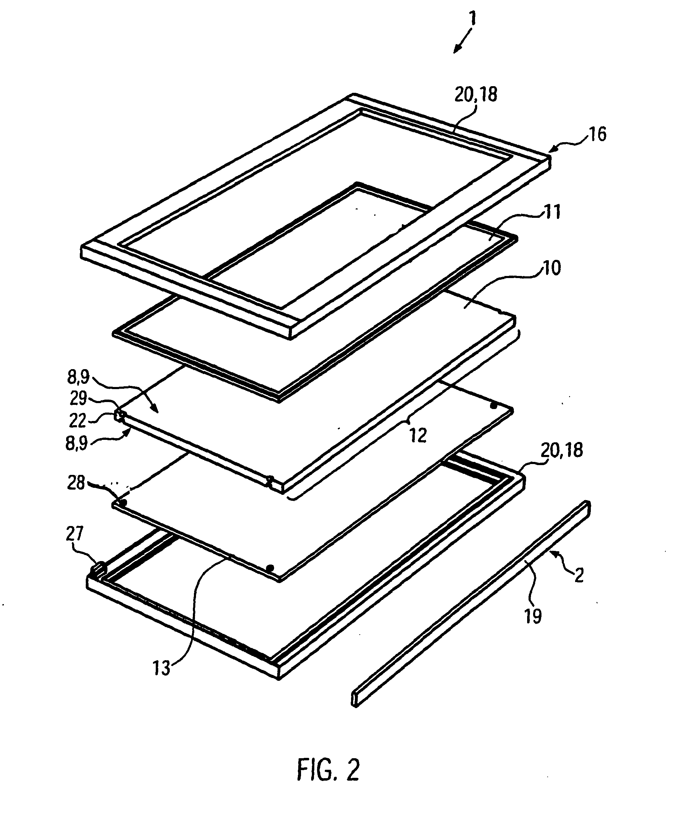

Analoge Ausführungen relativ zur Streuscheibe gelten auch bei beidseitiger Anordnung relativ zur Lichtleiterplatte, siehe Figur 2.

Bezüglich der Mikrostrukturen der Streuscheibe sei angemerkt, dass diese analog zu den Mikrostrukturen der Lichtleiterplatte herstellbar sind, siehe die folgenden Ausführungen.

Mittels der Streuscheibe erfolgt eine Formgebung, Kontrolle und Verteilung der entsprechenden Lichtstrahlen in dem entsprechenden Winkelbereich.

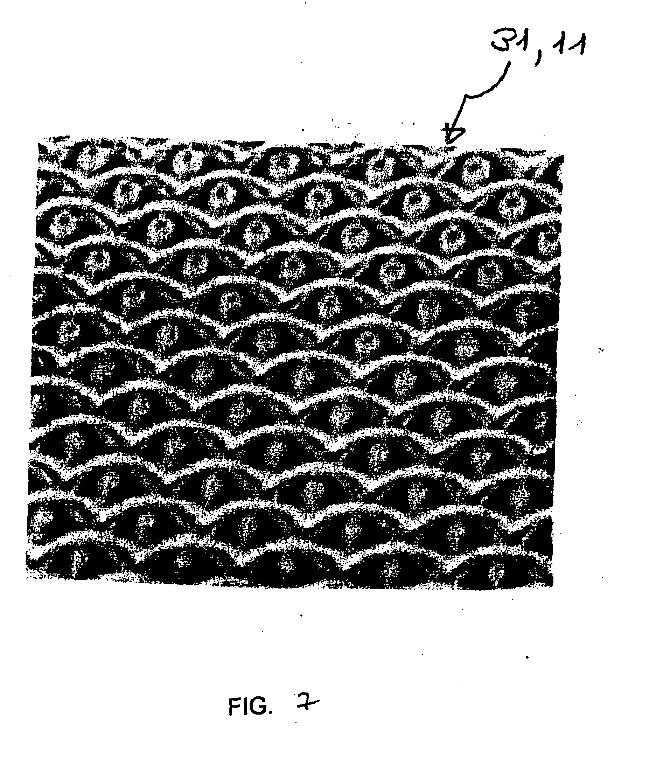

In Figur 7 ist vergrößert ein Teil der entsprechenden Oberfläche 30 mit Mikrostrukturen 31 einer Streuscheibe 11 dargestellt. Die Mikrostrukturen 31 sind linear und in benachbarten Reihen versetzt zueinander angeordnet. Die Mikrostrukturen sind insbesondere als Prismen in kegelartiger Geometrie ausgebildet.

Weitere Anordnungen der entsprechenden Mikrostrukturen auch mit anderen Geometrien sind möglich.

Weiterhin weist die Leuchte 1 eine Lichtleiterplatte 6 auf, die transparent bzw. durchscheinend und flach ausgebildet ist. Die Lichtleiterplatte weist an eine erste seitliche Oberfläche 7 und eine dieser gegenüberliegende zweite seitliche Oberfläche 10 auf. Der zweiten seitlichen Oberfläche 10 ist die Streuscheibe 11 zugeordnet. Auf zumindest der ersten seitlichen Oberfläche 7 ist eine Lichtverteilstruktur 9 aus einer Vielzahl von Mikrostrukturen 8 vorgesehen.

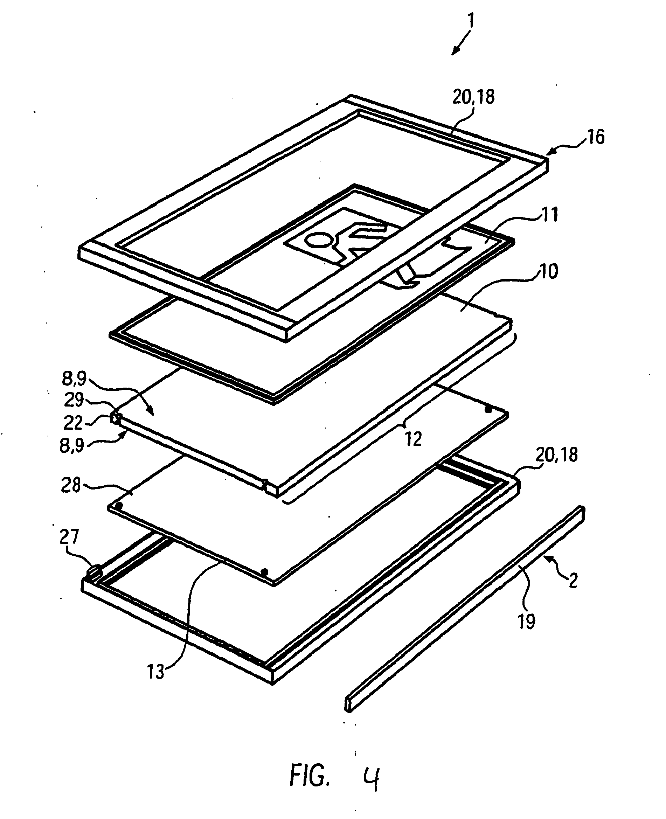

Es besteht ebenfalls die Möglichkeit, siehe beispielsweise Figur 4, dass die entsprechende Lichtleiterplatte 6 eine solche Lichtverteilstruktur 9 nicht nur auf der ersten seitlichen Oberfläche 7, sondern auch auf der zweiten seitlichen Oberfläche 10 aufweist. Zumindest auf der der seitlichen Oberfläche mit der Lichtverteilstruktur 9 gegenüberliegenden Oberfläche tritt Licht aus, das in die Lichtleiterplatte 6 über deren Lichteintrittskante 13 eingekoppelt wird. Die Lichteintrittskante 13 erstreckt sich in Umfangsrichtung um die Lichtleiterplatte 16 herum, wobei einem Abschnitt 12 der Lichteintrittskante 13 eine LED-Lichtquelle 2 zugeordnet ist. Diese ist bei dem Ausführungsbeispiel nach Figur 1 durch eine Reihe von LED's gebildet, die auf einer streifenförmigen Leiterplatte 19 angeordnet sind.

Die Leiterplatte 19 wird in der Leuchtenhalterung 16 zwischen Rückwand 17 und Rahmenbauteil 18 gehalten und ist entlang der unteren Lichteintrittskante 21 der Lichtleiterplatte 6 angeordnet.

Auf der mit der Lichtverteilstruktur 9 versehenen ersten seitlichen Oberfläche 7 ist eine Rückreflektionseinrichtung 15 beispielsweise in Form einer reflektierenden Folie oder dergleichen angeordnet. Diese reflektiert aus der ersten seitlichen Oberfläche 7 nach außen austretendes Licht zurück in Richtung zur zweiten seitlichen Oberfläche 10. Insgesamt wird durch die spezielle Lichtleiterplatte mit Lichtverteilstruktur 9 eine gleichmäßige Ausleuchtung der Streuscheibe 11 erzielt.

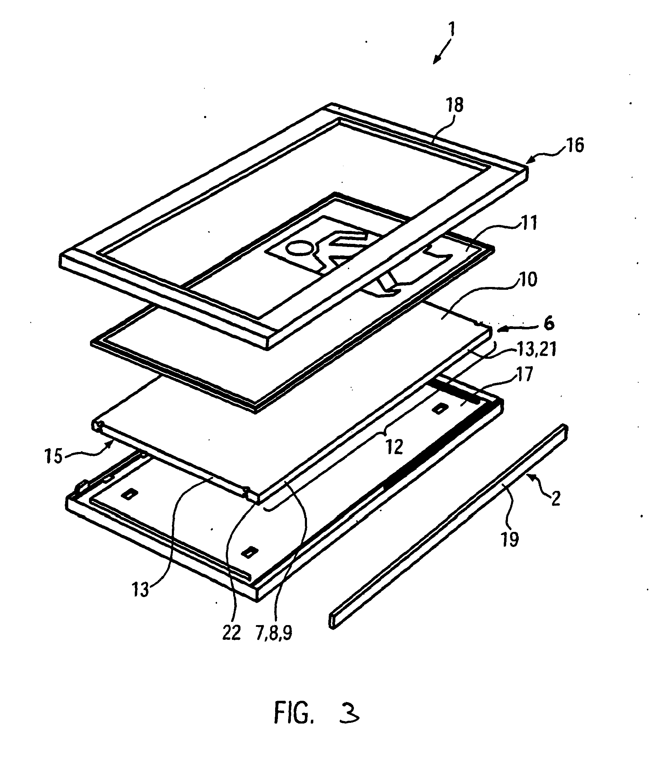

Bei dem weiteren Ausführungsbeispiel nach Figur 4 ist der Aufbau der entsprechenden Leuchte 1 ähnlich zu dem Ausführungsbeispiel nach Figur 3. Die Leuchte nach Figur 4 weist beidseitig Streuscheiben 11 auf und Licht wird über beide seitliche Oberflächen 7 und 10 abgegeben. Die entsprechende LED-Lichtquelle 2 ist wiederum dem Abschnitt 12 der unteren Lichteintrittskante 21 der insgesamt umlaufenden Lichteintrittskante 13 zugeordnet. Entsprechende eine Vielzahl von Mikrostrukturen aufweisende Lichtverteilstrukturen 9 sind auf beiden Oberflächen 7 und 10 angeordnet.

Die Leuchtenhalterung 16 weist an Stelle der Rückwand 17 nach Figur 3 ein Rahmenteil 20 aus zwei umlaufenden Rahmenbauteilen 18 auf. Zwischen diesen und insbesondere den entsprechenden umlaufenden Rändern sind die Piktogramme 11 und die Lichtleiterplatte 16 angeordnet und gehalten. Analog zu Figur 3 ist die LED-Lichtquelle 2 ausgebildet und in der Leuchtenhalterung 16 angeordnet.

Gegenüberliegend zur LED-Lichtquelle 2 weisen die Rahmenbauteile 18 Einrichtungen zur mechanischen Anbindung der Leuchte 1 an Decke oder Wand auf. Solche mechanischen Anbindungen ermöglichen eine direkte Montage an der Decke oder an einer Wand. Ebenfalls möglich ist eine Anbringung an Wand oder Decke mittels eines Auslegers oder einer Pendelaufhängung mit Seil- oder Stababhängung.

Zur genauen Zuordnung von Streuscheiben und Lichtleiterplatte können diese Rasterungen 28 bzw. 29 aufweisen. Die Rasterungen 29 der Lichtleiterplatte 6 sind als Rastvertiefungen und die Rasterungen 28 der Streuscheiben 11 als Rastvorsprünge ausgebildet.

Statt einer tatsächlichen Verrasterung kann auch ein loses Eingreifen von Rastvorsprung und Rastvertiefung stattfinden.

Figur 3 zeigt eine Sicherheits- oder Rettungszeichenleuchte 1 mit einem Piktogramm 11 mit einer Fluchtweganzeige. Das Piktogramm 11 ist einseitig in einer entsprechenden Leuchtenhalterung 16 aus Rückwand 17 und Rahmenbauteil 18 angeordnet. Das Piktogramm ist als Piktogrammscheibe mit einer Piktogrammfolie oder einer Piktogrammbedruckung ausgebildet.

Weiterhin weist die Leuchte 1 eine Lichtleiterplatte 6 auf, die transparent bzw. durchscheinend und flach ausgebildet ist. Die Lichtleiterplatte weist an eine erste seitliche Oberfläche 7 und eine dieser gegenüberliegende zweite seitliche Oberfläche 10 auf. Der zweiten seitlichen Oberfläche 10 ist das Piktogramm 11 zugeordnet. Auf zumindest der ersten seitlichen Oberfläche 7 ist eine Lichtverteilstruktur 9 aus einer Vielzahl von Mikrostrukturen 8 vorgesehen.

Es besteht ebenfalls die Möglichkeit, siehe beispielsweise Figur 2, dass die entsprechende Lichtleiterplatte 6 eine solche Lichtverteilstruktur 9 nicht nur auf der ersten seitlichen Oberfläche 7, sondern auch auf der zweiten seitlichen Oberfläche 10 aufweist. Zumindest auf der der seitlichen Oberfläche mit der Lichtverteilstruktur 9 gegenüberliegenden Oberfläche tritt Licht aus, das in die Lichtleiterplatte 6 über deren Lichteintrittskante 13 eingekoppelt wird. Die Lichteintrittskante 13 erstreckt sich in Umfangsrichtung um die Lichtleiterplatte 16 herum, wobei einem Abschnitt 12 der Lichteintrittskante 13 eine LED-Lichtquelle 2 zugeordnet ist. Diese ist bei dem Ausführungsbeispiel nach Figur 1 durch eine Reihe von LED's gebildet, die auf einer streifenförmigen Leiterplatte 19 angeordnet sind.

Die Leiterplatte 19 wird in der Leuchtenhalterung 16 zwischen Rückwand 17 und Rahmenbauteil 18 gehalten und ist entlang der unteren Lichteintrittskante 21 der Lichtleiterplatte 6 angeordnet.

Auf der mit der Lichtverteilstruktur 9 versehenen ersten seitlichen Oberfläche 7 ist eine Rückreflektionseinrichtung 15 beispielsweise in Form einer reflektierenden Folie oder dergleichen angeordnet. Diese reflektiert aus der ersten seitlichen Oberfläche 7 nach außen austretendes Licht zurück in Richtung zur zweiten seitlichen Oberfläche 10. Insgesamt wird durch die spezielle Lichtleiterplatte mit Lichtverteilstruktur 9 eine gleichmäßige Ausleuchtung des Piktogramms 11 erzielt.

Bei dem zweiten Ausführungsbeispiel nach Figur 2 ist der Aufbau der entsprechenden Leuchte 1 ähnlich zu dem Ausführungsbeispiel nach Figur 1. Die Leuchte nach Figur 2 weist beidseitig Piktogramme 11 auf und Licht wird über beide seitliche Oberflächen 7 und 10 abgegeben. Die entsprechende LED-Lichtquelle 2 ist wiederum dem Abschnitt 12 der unteren Lichteintrittskante 21 der insgesamt umlaufenden Lichteintrittskante 13 zugeordnet. Entsprechende eine Vielzahl von Mikrostrukturen aufweisende Lichtverteilstrukturen 9 sind auf beiden Oberflächen 7 und 10 angeordnet.

Die Leuchtenhalterung 16 weist an Stelle der Rückwand 17 nach Figur 1 ein Rahmenteil 20 aus zwei umlaufenden Rahmenbauteilen 18 auf. Zwischen diesen und insbesondere den entsprechenden umlaufenden Rändern sind die Piktogramme 11 und die Lichtleiterplatte 16 angeordnet und gehalten. Analog zu Figur 1 ist die LED-Lichtquelle 2 ausgebildet und in der Leuchtenhalterung 16 angeordnet.

Gegenüberliegend zur LED-Lichtquelle 2 weisen die Rahmenbauteile 18 Einrichtungen zur mechanischen Anbindung der Leuchte 1 an Decke oder Wand auf. Solche mechanischen Anbindungen ermöglichen eine direkte Montage an der Decke oder an einer Wand. Ebenfalls möglich ist eine Anbringung an Wand oder Decke mittels eines Auslegers oder einer Pendelaufhängung mit Seil- oder Stababhängung.

Die Piktogramme 11 können als Piktogrammscheiben mit einer Bedruckung ausgebildet sein. Dabei kann das eigentliche Piktogramm durch Siebdruck oder Tintenstrahldruck aufgebracht werden. Ebenfalls möglich ist eine Folie mit Bedruckung.

Zur genauen Zuordnung von Piktogrammen und Lichtleiterplatte können diese Rasterungen 28 bzw. 29 aufweisen. Die Rasterungen 29 der Lichtleiterplatte 6 sind als Rastvertiefungen und die Rasterungen 28 der Piktogramme 11 als Rastvorsprünge ausgebildet.

Statt einer tatsächlichen Verrasterung kann auch ein loses Eingreifen von Rastvorsprung und Rastvertiefung stattfinden.

Für alle Ausführungsbeispiele gilt weiterhin Folgendes.

Die LED-Lichtquelle 2 kann eine Mehrzahl von einzelnen LED's oder Mehrfachchip-LED's aufweisen. Bei einer solchen Mehrfachchip-LED's ist in der Regel eine gemeinsame Anode für die separate Ansteuerung der einzelnen Chips vorgesehen. Dadurch ist gewährleistet, dass auch bei Ausfall einer LED der Strom weiter über die anderen Chips fließt und beispielsweise ein dunkler Punkt der LED-Lichtquelle vermieden wird.

Die Anordnung der LED-Lichtquelle kann auch in anderer Weise als in den Figuren 1 und 2 erfolgen. Beispielsweise sind mehrere LED-Lichtquellen mit entsprechend streifenförmiger Leiterplatte 19 einsetzbar. Diese können entlang unterschiedlicher Abschnitte der Lichteintrittskante 13 der Lichtleiterplatte 6 angeordnet werden. Weiterhin kann jede LED-Lichtquelle auch eine einzelne LED aufweisen, um in diesem Zusammenhang punktuell an wenigen Punkten der Lichteintrittskante 13 Licht in die Lichtleiterplatte 6 einzukoppeln.

Die Leuchten können unterschiedliche Größen aufweisen, um insbesondere auch das Piktogramm aus unterschiedlichen Entfernungen gut zu erkennen.

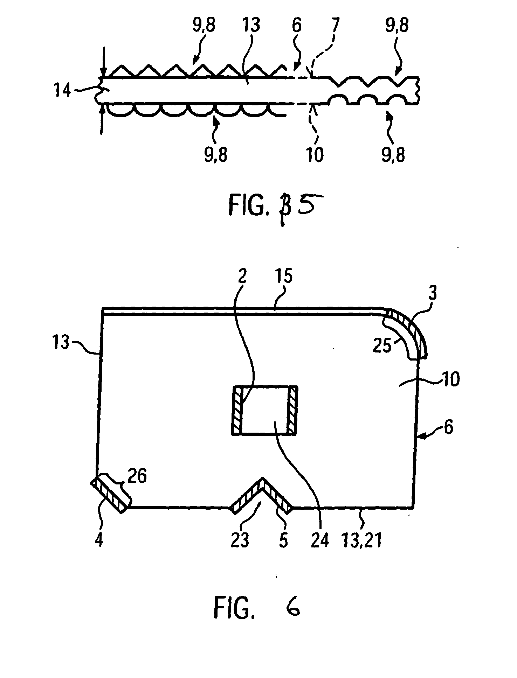

Die Vielzahl der Mikrostrukturen der Lichtverteilstruktur 9 ist vorzugsweise als Mikrolinsenstruktur ausgebildet, wobei verschiedene Ausführungsbeispiele dieser Mikrostrukturen bzw. Mikrolinsenstrukturen 6 in Figur 5 in einer seitlichen Ansicht der Lichtleiterplatte 6 dargestellt sind. Die entsprechenden Mikrostrukturen können auf den seitlichen Oberflächen aufgespritzt oder auch zusammen mit der Lichtleiterplatte geformt sein.

Eine erste Art der Mikrostruktur weist eine im Wesentlichen umgekehrte V-Form auf. Diesen Mikrostrukturen sind in Figur 3 teilsphärische Mikrostrukturen gegenüberliegend, d.h. auf der anderen seitlichen Oberfläche 10 angeordnet. Denkbar sind auch andere Formen, beispielsweise in Draufsicht sichelförmige, und auch unsymmetrische und/oder ungleichmäßig verteilte Formen.

Es besteht ebenfalls die Möglichkeit, statt von den entsprechenden Oberflächen vorstehenden Mikrostruktur, in die Oberfläche hineinverlaufende Mikrostrukturen zu verwenden, siehe in Figur 5 die rechte Seite der Lichtleiterplatte.

Um die Herstellung einer entsprechenden Lichtleiterplatte 6 zu vereinfachen, weisen die Mikrostrukturen auf beiden Oberflächen in der Regel gleiche Größe und Form auf. Allerdings ist es möglich, dass sich die Mikrostrukturen auch auf nur einer Lichtleiterplatte in Form, Größe, Dichte, Orientierung und der gleichen unterscheiden.

In der Regel werden die entsprechenden Mikrostrukturen in einer Dichte von mehreren 100 pro cm² und bevorzugt von mehreren 1000 pro cm² ausgebildet.

Eine entsprechende Dicke 14 der Lichtleiterplatte liegt im Bereich von 1 mm bis 10 mm und insbesondere im Bereich von 2 mm bis 6 mm.

In Figur 6 ist eine Draufsicht auf eine Lichtleiterplatte 6 mit verschiedenen Ausführungsbeispielen zur Anordnung von LED-Lichtquellen 2, 3, 4 und 5 dargestellt. Zusätzlich ist bei diesem Ausführungsbeispiel eine Reflektionseinrichtung 30 entlang eines Abschnitts der Lichteintrittskante 13 insbesondere gegenüberliegend zu dem Abschnitt 12, siehe Figuren 1 und 2, der Lichteintrittskante angeordnet, dem die entsprechende LED-Lichtquelle 2 in den Figuren 1 und 2 zugeordnet ist.

In Figur 6 ist insbesondere auch Ecken der Lichteintrittskante, siehe Abschnitte 25 und 26, eine entsprechende LED-Lichtquelle 3 bzw. 4 zugeordnet. Diese sind analog zu den Figuren 1 und 2 streifenförmig aufgebaut und weisen LED's direkt auf beispielsweise einer streifenförmigen Leiterplatte 19 auf.

Der Abschnitt 26 entspricht einer abgeschrägten Ecke und der Abschnitt 25 einer abgerundeten Ecke der Lichteintrittskante 13. Mikrostrukturen 8 können bei dem Ausführungsbeispiel nach Figur 4 ebenfalls auf beiden seitlichen Oberflächen 7 und 10 ausgebildet sein.

Die Lichtleiterplatte 6 kann auch Randöffnungen bzw. Innenöffnungen 23 bzw. 24 aufweisen. In der nach außen offenen Randöffnungen 23 ist eine umgekehrt V-förmige LED-Lichtquelle 5 und in der etwa quadratischen Innenöffnung 24 eine zweigeteilte LED-Lichtquelle 2 angeordnet. Im Bereich dieser Öffnungen 23, 24 sind ebenfalls entsprechende Lichteintrittskanten 13 gebildet, entlang denen die LED-Lichtquellen 5 bzw. 2 angeordnet sind.

Verschiedene andere Anordnungen für entsprechende LED-Lichtquellen ergeben sich offensichtlich aus den obigen Ausführungen insbesondere zu Figur 6.

Die erfindungsgemäße Leuchte zeichnet sich insbesondere durch eine flache Bauweise aus und durch eine sehr gleichmäßige Ausleuchtung der entsprechenden Streuscheiben, beziehungsweise Piktogramme, die sich auf Grund der Vielzahl von Mikrostrukturen 8 der Lichtverteilstruktur 9 ergibt. Dadurch ergibt sich eine hohe Ausnutzung der Leuchtdichte der entsprechenden LED-Lichtquelle, so dass auch LED's mit geringem Energiebedarf zu einer ausreichenden und gleichmäßigen Ausleuchtung der Streuscheiben (Piktogramme) verwendet werden können, so dass sich insgesamt auch ein geringer Energieverbrauch der erfindungsgemäßen Leuchte ergibt.

Es ist möglich, statt der Lichtleiterplatte mit Lichtverteilstruktur aus der Vielzahl von Mikrostrukturen eine Lichtleiterplatte mit anderen Strukturen zu verwenden. Solche Strukturen werden beispielsweise auf eine entsprechende Oberfläche der Lichtleiterplatte aufgedruckt (Siebdruck), chemisch oder physikalisch geätzt. Allerdings ergibt sich bei solchen Strukturen in der Regel ein größerer Streuwinkel, so dass sich insgesamt eine schlechtere Ausleuchtung der entsprechenden Piktogramme ergibt.

Weitere Montageteile zum Anbringen der Leuchte 1 an Wand oder Decke, direkt oder mit Ausleger oder Aufhängung sind zur Vereinfachung in den Figuren 1 bis 4 nicht dargestellt. Es sei allerdings noch angemerkt, dass die entsprechenden mechanischen Teile in der oder an der Leuchtenhalterung 16 gegenüberliegend zur LED-Lichtquelle anordbar sind, so dass insgesamt für die Montage mehr Freiraum vorhanden ist. Auch entsprechende elektronische Einrichtungen zur Steuerung der Leuchte können in der Leuchtenhalterung 16 gegenüberliegend zur LED-Lichtquelle 2, siehe beispielsweise Figuren 1 bis 4, angeordnet werden.

Die erfindungsgemäße Leuchte eignet sich insbesondere zum direkten Anliegen an einer Decke oder Wand und zeichnet sich durch ihr flaches Design aus.

## Patentansprüche

1. Leuchte, insbesondere Not-, Rettungs- oder Sicherheitsleuchte (1) mit wenigstens:
- einer LED-Lichtquelle (2, 3, 4, 5);
- einer transparenten bzw. durchscheinenden und flachen Lichtleiterplatte (6), welche zumindest auf einer ersten seitlichen Oberfläche (7) eine aus einer Vielzahl von Mikrostrukturen (8) gebildete Lichtverteilstruktur (9) zur gleichmäßigen Ausleuchtung einer der ersten seitlichen Oberfläche gegenüberliegenden zweiten seitlichen Oberfläche (10) aufweist, und
- einer bzw. einem der zweiten seitlichen Oberfläche (10) zugeordneten Streuscheibe, bzw. Piktogramm
wobei die LED-Lichtquelle (2, 3, 4, 5) wenigstens einem Abschnitt (12, 25, 26) einer im Wesentlichen umlaufenden Lichteintrittskante (13) der Lichtleiterplatte (6) zur Lichteinkopplung zugeordnet und eine Lichteinkoppelstruktur auf zumindest den der LED-Lichtquelle zugeordneten Abschnitten der Lichteintrittskante ausgebildet ist.

2. Leuchte nach Anspruch 1, **dadurch gekennzeichnet, dass** die Mikrostrukturen (8) als Mikrolinsenstrukturen ausgebildet sind.

3. Leuchte nach Anspruch 1 oder 2, **dadurch gekennzeichnet, dass** die Mikrostrukturen (8) mit einer Dichte von mehreren 100/cm² und insbesondere mehreren 1000/cm² angeordnet sind.

4. Leuchte nach einem der vorangehenden Ansprüche, **dadurch gekennzeichnet, dass** die Mikrostrukturen (8) als gespritzte Mikrostrukturen ausgebildet sind.

5. Leuchte nach einem der vorangehenden Ansprüche, **dadurch gekennzeichnet, dass** die Mikrostrukturen (8) in Orientierung, Anordnung, Größe, Form oder dergleichen variabel ausbildbar sind.

6. Leuchte nach einem der vorangehenden Ansprüche, **dadurch gekennzeichnet, dass** die Mikrostrukturen zusammen mit der Lichtleiterplatte (6) geformt sind.

7. Leuchte nach einem der vorangehenden Ansprüche, **dadurch gekennzeichnet, dass** die LED-Lichtquelle (2, 3, 4, 5) eine Mehrzahl von einzelnen LED's oder Mehrfachchip-LED's aufweist.

8. Leuchte nach einem der vorangehenden Ansprüche, **dadurch gekennzeichnet, dass** die LED-Lichtquelle (2, 3, 4, 5) streifenförmig ausgebildet ist.

9. Leuchte nach einem der vorangehenden Ansprüche, **dadurch gekennzeichnet, dass** die LED-Lichtquelle (2, 3, 4, 5) LED's mit unterschiedlichen Ausrichtungen und/oder unterschiedlichen Färben aufweist.

10. Leuchte nach einem der vorangehenden Ansprüche, **dadurch gekennzeichnet, dass** die Lichtleiterplatte (6) eine Dicke im Bereich von 1 bis 10 mm und insbesondere im Bereich von 2 bis 6 mm aufweist.

11. Leuchte nach einem der vorangehenden Ansprüche, **dadurch gekennzeichnet, dass** eine Rückreflektionseinrichtung (15) der ersten seitlichen Oberfläche (7) zugeordnet ist.

12. Leuchte nach einem der vorangehenden Ansprüche, **dadurch gekennzeichnet, dass** die Leuchte (1) eine Leuchtenhalterung (16) aus insbesondere einem umlaufenden Rahmenbauteil (18) und einer Rückwand (17) aufweist.

13. Leuchte nach einem der vorangehenden Ansprüche, **dadurch gekennzeichnet, dass** die LED-Lichtquelle (2, 3, 4, 5) auf einer insbesondere streifenförmigen Leiterplatte (19) angeordnet ist.

14. Leuchte nach einem der vorangehenden Ansprüche, **dadurch gekennzeichnet, dass** die Lichtleiterplatte (6) auf ihrer ersten und zweiten seitlichen Oberfläche (7, 10) mit einer Lichtverteilstruktur (9) ausgebildet ist.

15. Leuchte nach Anspruch 14, **dadurch gekennzeichnet, dass** die Leuchtenhalterung (16) aus wenigstens einem beidseitig offenen und insbesondere umlaufenden Rahmenteil gebildet ist.

16. Leuchte nach einem der vorangehenden Ansprüche, **dadurch gekennzeichnet, dass** die LED-Lichtquelle (2, 3, 4, 5) einer unteren Lichteintrittskante und/oder wenigstens einer Ecke (22) der Lichteintrittskante (13) der Lichtleiterplatte (6) zugeordnet ist.

17. Leuchte nach einem der vorangehenden Ansprüche, **dadurch gekennzeichnet, dass** die LED-Lichtquelle (2, 3, 4, 5) einer Randöffnung (23) und/oder einer Innenöffnung (24) der Lichtleiterplatte (6) im Bereich einer entsprechenden Lichteintrittskante zugeordnet ist.

18. Leuchte nach einem der vorangehenden Ansprüche, **dadurch gekennzeichnet, dass** LED-Lichtquellen (2, 3, 4, 5) an voneinander beabstandeten Abschnitten (25, 26) der Lichteintrittskante (13) angeordnet sind.

19. Leuchte nach einem der vorangehenden Ansprüche, **dadurch gekennzeichnet, dass** Aufhängungs- oder Befestigungseinrichtungen sowie Elektronik der Leuchte (1) gegenüberliegend zur LED-Lichtquelle (2, 3, 4, 5) angeordnet sind.

20. Leuchte nach einem der vorangehenden Ansprüche, **dadurch gekennzeichnet, dass** die Streuscheibe (11) auf ihrer der Lichtleiterplatte (6) abgewandten Oberfläche (30) Mikrostrukturen (31) aufweist, wobei die Mikrostrukturen insbesondere symmetrische oder asymmetrische Prismen und/oder insbesondere linear oder zirkular angeordnet sind.

21. Leuchte nach Anspruch 20, **dadurch gekennzeichnet, dass** die Mikrostrukturen (31) einen Abstand von 0,5 bis 1,5 mm und insbesondere von 0,8 bis 1,2 mm aufweisen.

22. Leuchte nach Anspruch 20 oder 21, **dadurch gekennzeichnet, dass** die Prismen als Mikrostrukturen (31) in kegelartiger Geometrie geformt sind.

23. Leuchte nach einem der vorangehenden Ansprüche 20 bis 22, **dadurch gekennzeichnet, dass** Licht mit einem Winkel von mehr als 70° und insbesondere von mehr als 65° zur Streuscheibensenkrechten (32) abgeschnitten ist.

24. Leuchte nach einem der vorangehenden Ansprüche, **dadurch gekennzeichnet, dass** Streuscheibe (11) und Lichtleiterplatte (6) aus gleichen Materialien gebildet sind.
